# EUROPEAN PATENT APPLICATION

(11) **EP 1 151 816 A1**
(43) Date of publication of application: **07.11.2001**
(21) Application number: 00974871.6
(22) Date of filing: 09.11.2000
(51) Int. Cl.: B22F 3/00, C08L 83/04, C08J 5/00

(54) **HYDROGEN STORAGE COMPOSITE FORMED ARTICLE AND METHOD FOR PREPARING THE SAME**

(30) Priority: 10.11.1999 JP 31904099
(71) Applicant: Shin-Etsu Chemical Co., Ltd., Chiyoda-ku, Tokyo 100-0004 (JP)
(72) Inventor: NAKANO, Hajime Magnetic Mater. Res. & Dev. Center, Takefu-shi, Fukui 915-0802 (JP); HAMAYA, Noriaki Magnetic Mater. Res. & Dev. Center, Takefu-shi, Fukui 915-0802 (JP); SHIMA, Satoshi Magnetic Mater. Res. & Dev. Center, Takefu-shi, Fukui 915-0802 (JP)
(74) Representative: Jones, Keith William
(86) International application number: JP0007894
(87) International publication number: WO0134328

(57) **Abstract**

The present invention relates to a hydrogen absorbing composite compact comprising silicone resin, and a process for making the compact, the compact being without particle size reduction or decay even when absorptions and desorptions of hydrogen are repeated for a long period of time and excelling in heat resistance, moldability and processibility. More particularly, the present invention provides a hydrogen absorbing composite compact which comprises hydrogen absorbing alloy and preferably 0.5 to 50% by weight silicone resin. Furthermore, the present invention provides a process for making the hydrogen absorbing composite compact comprising a step wherein a hydrogen absorbing alloy powder is molded by compression, a step for impregnation in a silicone resin solution or dispersion liquid and a sep for curing, and a process for making the hydrogen absorbing composite compact comprising a step for mixing a hydrogen absorbing alloy with any one selected from silicone resin itself, a silicone resin solution and a silicone resin dispersion liquid, a step for molding and a step for curing.

## Description

### Technical Field

The present invention relates to a hydrogen absorbing composite compact comprising silicone resin and a process for making the compact, and more particularly relates to a hydrogen absorbing composite compact comprising a hydrogen absorbing material and a binder of silicone resin, the compact not having particle size reduction or transformation even when absorptions and desorptions of hydrogen are repeated for a long period of time, and to a production process therefor.

### Background of Art

Hydrogen absorbing alloys have come to be utilized as a material for separation or purification of hydrogen, catalyst, a sensor and the like, as well as a hydrogen absorbing material for stationary tanks, a hydrogen source for fuel cells and for hydrogen-fueled cars, and a energy conversion material in heat storage systems taking an advantage of endothermicity or exothermicity in their absorption and desorption of hydrogen, and others.

In many uses, hydrogen absorbing alloys are filled in a container as a powder having particle diameters of millimeters or less. However, many problems are raised for such a usage. The fundamental problem is that a hydrogen absorbing alloy expands or shrinks by 30% at most when it absorbs or desorbs hydrogen. The stress caused thereby increases particle size reduction thereof. Together with the particle size reduction, some troubles happen and become major obstacles to put the hydrogen absorbing alloy in practical use. The troubles include the destruction of the container due to the volume expansion of the alloy, clogging of a filter attached to the container, and reduction in an ability to absorb or desorb hydrogen due to decline of their thermal conductivity. Furthermore, in case that the hydrogen absorbing alloy is used as a hydrogen source for a fuel cell car or for a hydrogen-fueled car or the like, a problem arises that a hydrogen absorbing alloy is accumulated at the bottom of a tank due to vibration during driving.

For such reasons, it is desired to develop a hydrogen absorbing compact which does not promote particle size reduction, even when absorptions and desorptions of hydrogen are repeated for a long period of time.

Hydrogen absorbing compacts which use hydrogen absorbing alloys are proposed by Japanese Patent Publication (JP-B) No. No. 58-20881/1983, Japanese Patent Provisional Publication (JP-A) No. 57-145001/1982, Japanese Patent Provisional Publication (JP-A) No. 8-11241/1996 and others. Although all of them are art using synthetic resins, they had some problems such as difficulty in handling or reduction in the speed for absorbing and desorbing hydrogen.

Particularly, Japanese Patent Provisional Publication (JP-A) No. 8-11241/1996 discloses use of a fluorocarbon resin. However, the compact using the fluorocarbon resin provides problems in being inferior in elasticity as an absorbing material and being slow in the gas discharge speed owing to its poor gas transmission.

### Disclosure of Invention

The present invention is intended to settle the above-mentioned problems in prior art and relates to a hydrogen absorbing composite compact comprising silicone resin, and a process for making the compact, the compact excelling in heat resistance, weatherability, moldability and processibility and not having particle size reduction or decay of hydrogen absorbing alloy even when absorptions and desorptions of hydrogen are repeated for a long period of time and being excellent in dimensional stability.

A hydrogen absorbing composite compact comprising silicone resin in the present invention is characterized by a hydrogen absorbing material being used with a binder of silicone resin in view of hydrogen absorption and desorption. Further, the hydrogen absorbing composite compact preferably comprises 0.5 to 50% by weight silicone resin in the compact wherein the silicone resin is used as a binder.

According to the process for making the hydrogen absorbing composite compact comprising silicone resin of the present invention, the hydrogen absorbing material is molded by compression, impregnated in a silicon resin solution or dispersion liquid, and cured; or hydrogen absorbing alloy powder is mixed with silicone resin, or a silicone resin solution or dispersion liquid and the resulting mixture is molded and cured.

According to the process for making the hydrogen absorbing composite compact comprising silicone resin of the present invention, it is possible to produce the hydrogen absorbing composite compact in any shape such as an angular shape, cylinder, discoid, tube or film.

The compact of the present invention has an ability that the compact itself can absorb and desorb hydrogen.

Since the hydrogen absorbing composite compact of the present invention comprises a binder of silicone resin which excels in elasticity, the absorption and desorption of hydrogen do not cause a decay or transformation thereof even in the region where the amount of binder is smaller. Moreover, owing to an excellent gas permeability of the silicone resin, the compact can give rise to the almost same speed and amount of hydrogen absorption as the hydrogen absorbing material itself.

Since the silicone resin possesses a stable rubber elasticity in a broad temperature range of -70°C to 250°C, decay, transformation or the like of a hydrogen absorbing material can be prevented even at low temperature such as in an extremely cold environment, and absorption and desorption at high temperature can be also carried out. Thus, the hydrogen absorbing composite compact having a high desorption efficiency can be provided.

Moreover, according to the present invention, any desired shape of hydrogen absorbing composite compact is obtained by molding such as compression molding or extrusion molding and does not decay or transform by repeating the hydrogen absorption and desorption owing to a rubber elasticity thereof. In addition, the hydrogen absorption and desorption at higher temperature can be carried out so that the extent adaptable to a device design can be broadened.

### Brief Description of Drawings

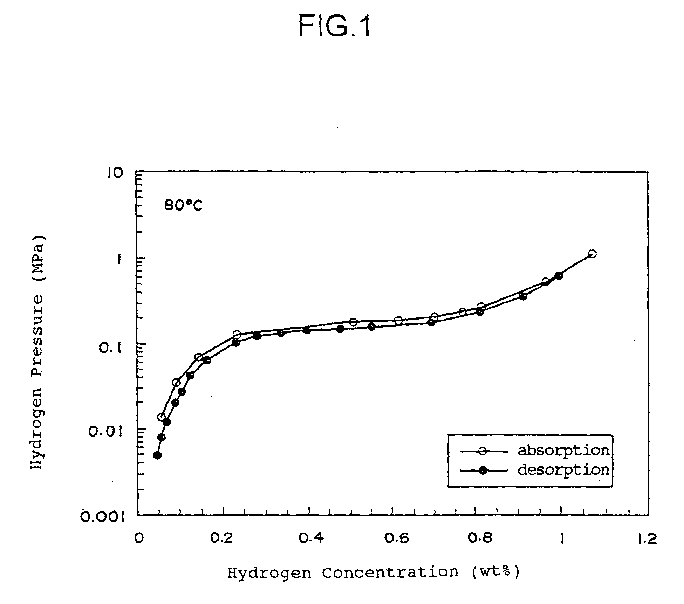

Figure 1 shows PCT characteristic curves of the hydrogen absorbing compact of Example 1.

### Best Mode for Carrying Out The Invention

Embodiments in the present invention for the hydrogen absorbing composite compact comprising silicone resin and a process for making the compact, will be explained in detail.

The hydrogen absorbing material used in the present invention is preferably selected from metal, carbon material and alloy, each of which has an ability to absorb hydrogen. The carbon material includes nanotube (carbon nano tube), fulleren (Carbon 60), graphite and nanofiber.

The hydrogen absorbing material used in the present invention is most preferably a hydrogen absorbing alloy such as a MmNi₅ type (Mm: a misch metal in which part of La is replaced by Ce, Pr, Nd or the other rare earth element or elements). Moreover, the hydrogen absorbing material includes at least one metal selected from Li, Na, Ca, Ti, Zr, V, Al, Ga, Sn, As, B, Si, Ge, Pd, Pt and rare earth metals such as La, and a composite compound such as Li-B, Na-B, Li-Al, Na-Al or misch metal, which can have an ability to absorb and desorb hydrogen. The form of the hydrogen absorbing material may be of particles having a particle size which is adapted to be dispersed in the silicone resin for a desired composite compact.

First, a hydrogen absorbing alloy powder used in the present invention will be explained.

The composition and preparation method of a hydrogen absorbing alloy ingot used for the hydrogen absorbing alloy powder are not particularly limited, and a hydrogen absorbing alloy having a structure of ABₙ (n represents a positive number from 0.5 to 6) such as a MmNi₅ type or Mg-Ni type, or a BCC-Laves structure such as a Ti-V type or Ti-Cr type can be used.

As one of examples, compositions for an AB₅ type (MmNi₅) hydrogen absorbing alloy will be explained in details.

In the AB₅ type alloy, an element or elements of side A are La alone, or a combination of La and one or more rare earth elements. More specifically, La, Mm, Lm (Lm represents a misch metal being rich in La content (50% by weight or more La)), and a combination thereof having the other rare earth element added may be included in side A. Furthermore, side A preferably contains 20 mol% or more La in total of rare earth elements.

As an element or elements in side B, the composition of (Ni)ₐ(Co)_{b}(Al)_{c}(Mn)_{d}(M)ₑ is preferable, wherein a is a positive number from 1.8 to 6.0, b is 0 or a positive number of 1.0 or less, c is 0 or a positive number of 1.0 or less, d is 0 or a positive number of 1.0 or less, e is 0 or a positive number of 0.5 or less. M is at least one element selected from the group consisting of Si, Fe, Pb, Ti, Ca, Mg, Cu, In, Zn, Cr, and Zr.

After mixing metal element components of the above-mentioned composition, the mixture is melted at temperature of 1300 to 1600°C under an atmosphere of inert gas such as argon using a high-frequency melting furnace, an arc melting furnace or the like, and then cooled to yield a hydrogen absorbing alloy ingot. In this case, hydrogen absorbing alloy thin ribbons obtained by a rapid quenching method such as a rapid roll quenching method or the like, or a hydrogen absorbing alloy spherical powder obtained by a disc atomization method may be used. The alloy may be optionally treated at temperature of about 1000°C under an inert atmosphere such as Ar or the like.

Next, the hydrogen absorbing alloy ingot is pulverized to yield a powder.

The pulverization method preferably includes pulverizing the ingot by means of a jet mill, attritor, jaw crusher, roller mill, ball mill, Brown mill, or others under an atmosphere of an inert gas such as nitrogen and argon to yield a powder having an average particle diameter of 500*µ*m or less. It is also possible to pulverize the ingot by absorption and desorption of hydrogen. And, in case of the hydrogen absorbing alloy spherical powder obtained by a disc atomization method, it is possible to use the spherical powder as it is, or the further pulverized powder.

The hydrogen absorbing alloy powder having an average particle diameter of 500*µ*m or less may be obtained so that an initial reaction area is smaller and the speed for absorbing hydrogen is not decreased. The average particle diameter of the hydrogen absorbing alloy powder is preferably finer in view of moldability, preferably 100*µ*m or less, although it depends on a compact shape. The surface of the hydrogen absorbing material may be treated in advance with a silane coupling agent or the like.

Thus, the obtained hydrogen absorbing material may be molded together with a binder of silicone resin to yield a hydrogen absorbing composite compact. It is preferable in view of absorptions and desorptions of hydrogen that the binder is silicone resin which excels in dimensional stability so that the change in dimension or shape is small.

The silicone resin used as a binder in the present invention is not particularly limited as long as it possesses elasticity after it is cured by crosslinking. It includes a broad range of well-known materials such as silicone rubber, silicone elastoplastic and junction coating resin. It is preferable to use silicone rubber among them in view of compact shapes in the present invention.

various kinds of silicone rubber are available depending on structures, curing mechanisms and others. The silicone rubber is classified into two main groups, a millable type of silicone rubber and liuid silcone rubber. The former contains a high polymerization degree of diorganopolysiloxane (linear polymer having viscosity of several millions cp) as a main component. The latter contains a low polymerization degree of diorganopolysiloxane (linear polymer having viscosity of 100 to 100,000 cp) as a main component. According to the present invention, it is preferable to use liquid silicone rubber and more preferable to use silicone rubber which can be classified into a single component type or a binary type based on their structure.

The curing mechanism includes radical curing, addition curing and condensation curing, each of which further includes thermal curing and room temperature curing. Thus, many kinds of silicone rubber are commercially available depending on curing mechanism. These commercially available products may be used as the binder of the present invention.

The silicone resin of the present invention can comprise a filler, a wetting agent, a crosslinker or curing catalyst, in addition to a main component of diorganopolysiloxane. If necessary, netted siloxane as a enforcing material, siloxane having no functional group for low hardness, sealing assistant, heat resistance assistance, carbon black for conductivity or the like may be added.

Although the most common example for a main component of diorganosiloxane is dimethypolysiloxane, groups other than methyl group may be used, depending on applications. An alkyl group such as ethyl, a phenyl group, a fluoroalkyl group or the like may be used. A terminal group commonly includes a group having a hydroxyl group, an alkoxyl group, and a vinyl group, which possesses functionality. The linear organopolysiloxane may comprise a silalkyl linkage or a modified linkage such as polyehter, polyester or urethane, depending on applications.

The curing types other than the thermal curing in use of organic peroxide as catalyst require a crosslinker for elasticizing a crosslinked rubber. The condensation curing includes de-acetic acid type, de-alcohol type, de-amine type and de-oxime type based on the byproduct generated at a condensation reaction, wherein, for example, a crosslinker may be the corresponding multifunctional silane or siloxane and cure catalyst may be metal salt of organic acid, amine or titanate. The addition curing commonly uses diorganopolysiloxane having a unsaturated group, a crosslinker being hydrogen silane or siloxane having two or more =SiH groups, and further Pt-based cure catalyst.

The curing conditions for these silicone resin are variable depending on the type of resin used. A type for a room temperature curing is included and crosslinking cure takes place at room temperature to 350°C. More specifically, cure may be carried out at room temperature to 80°C for condensation curing, at room temperature to 200°C for addition curing and 100 to 300°C for radical curing.

Although any type of silicone resin may be used in the present invention, it is more advantageous in view of workability, productivity and so on to select addition curing or radical curing wherein working hours for impregnation to a hydrogen absorbing material, for kneading with the material and for others are relatively easily controlled and rapid curing is possible in a short period of time by heating.

Although silicone resin as a binder may be used as it is, it is preferable in view of the process for producing hydrogen absorbing composite compact described below to use a solution thereof in toluene, xylene or the like, or a dispersion liquid thereof such as emulsion.

Moreover, the silicone resin property has to be considered from viewpoint of durability and weatherability in order to obtain desirable hydrogen absorption and desorption in the present invention. It is preferable to use the resin having hardness (durometer A) of 0 to 100, more preferably of 0 to 70 and elongation of 20 to 1000%, more preferably of 50 to 700%.

When the hardness of the resin is too high, the compact shape may be changed as the hydrogen absorbing material absorbs and desorbs hydrogen. When the hardness is too low, the desired compact shape may not be obtained. Similarly to the elongation, when the elongation is too high or too small, the dimensional stability may be worsen owing to lack of rubber elasticity.

The content of silicone resin as a binder is preferably from 0.5 to 50% by weight, more preferably 0.5 to 20% by weight, further more preferably 1 to 10% by weight in the hydrogen absorbing composite compact. The compact having the binder in these ranges of content possesses elasticity and a higher amount of hydrogen absorption owing to a higher content of a hydrogen absorbing material. When the content is less than 0.5% by weight, which may be an insufficient amount for the binder use, it may be difficult to hold the shape of the hydrogen absorbing composite compact toward expansions and contractions caused by absorptions and desorptions of hydrogen. When the content is more than 50% by weight, a hydrogen storage capacity per unit volume of a hydrogen absorbing compact may be reduced.

Silicone resin may be used as it is, or used in the form of a solution or a dispersion liquid thereof. In case of a solution, solvent may include toluene, hexane and water. In case of a dispersion liquid, dispersion medium may include water and alcohol.

According the process for making a hydrogen absorbing composite compact, the hydrogen absorbing alloy material is molded by compression (for example, at 0.05 MPa or more), and the obtained composite compact is impregnated in a solution or a dispersion liquid which has been prepared so as to have a prescribed concentration of silicone resin, and then cured. As the result of this process, the silicone resin being present in pores of the composite compact fixes hydrogen absorbing material as a binder, and moreover, because of the elasticity thereof, absorbs the stress caused by expansions and contractions (especially of the alloy) when the material absorbs or desorbs hydrogen. Consequently, the hydrogen absorbing material will not have particle size reduction or decay even if the cycles of absorption and desorption of hydrogen are repeated for a long period of time.

Moreover, according to the process comprising steps of molding by compression and then impregnating with the binder, the contacts among hydrogen absorbing materials are maintained so that heat conductivity for the composite compact enhances.

According to another process for making a hydrogen absorbing composite compact of this invention, the obtained hydrogen absorbing material, especially alloy powder, is mixed with the prescribed amount of silicone resin itself, a solution thereof or a dispersion liquid thereof, and then the mixture is molded and cured.

In this process, since the molding takes place in a state where the surface of the hydrogen absorbing alloy particles is covered with silicone resin so that the particles are fixed through silicone resin which functions as a binder, the elasticity of the hydrogen absorbing composite compact can be strengthened, resulting in improvement on dimensional stability and durability toward the repeated absorptions and desorptions of hydrogen.

According to these processes, although the silicone resin content in the hydrogen absorbing composite compact is not limited, it is preferably 0.5 to 50% by weight in the hydrogen absorbing composite compact.

Moreover, depending on the kind and content of silicone resin to be used, any molding process such as compression molding, extrusion molding or a coating (thin film) method can be selected.

According to a hydrogen absorbing composite compact comprising silicone resin of the present invention, although silicone resin adheres partly to the surface of hydrogen absorbing material or covers the whole surface, the silicone resin hardly reduces the alloy's ability for absorption and desorption of hydrogen because of its excellent gas permeability and does not reduce the rate of absorption and desorption of hydrogen. Moreover, the alloy does not have particle size reduction or decay even if absorptions and desorptions of hydrogen are repeated because of the elasticity of silicone resin. Consequently, the hydrogen absorbing composite compact can be used for a long period of time. Moreover, since any molding and curing methods can be chosen depending on the kind of silicone resin, it is possible to obtain hydrogen absorbing composite compact in any shape including an angular shape, cylinder, discoid, tube, and thin film.

The present invention is further explained below in detail by examples, but not limited thereby.

### <Example 1>

A hydrogen absorbing alloy ingot (assigning a combination of 34% by weight of La, 45% by weight of Ce, 6% by weight of Pr and 15% by weight of Nd for 1.0 in atomic ratio; 3.75 of Ni, 0.75 of Co, 0.20 of Mn, and 0.30 of Al in atomic ratio are also contained therein) produced in a high-frequency melting furnace was heat-treated in argon to prepare a uniform hydrogen absorbing alloy ingot. The alloy ingot was roughly pulverized under an atmosphere of nitrogen. Further, it was pulverized by Brown mill to yield a powder having a particle size of 1mm or less, which is a raw material for a subsequent jet mill. Moreover, according to the present invention, a hydrogen absorbing alloy fine powder having an average particle size of 6*µ*m and a width of a particle size distribution of 1 to 30*µ*m was obtained by dry pulverization of the hydrogen absorbing alloy by means of a jet mill at a gas pressure of 5.8 kgf/cm² under an atmosphere of nitrogen gas. Then, about 2.6 g of the pulverized fine powder was placed in a metal mold and molded under a pressure of 200 MPa to produce a cylinder of 11mm in outside diameter, 7mm in inside diameter, and 10mm in length. This compact of the hydrogen absorbing alloy was placed in toluene solution of 20% by weight silicone resin and deaerated for a prescribed period. The silicone resin used is KE1820 supplied by Shin-Etsu Chemical Co., Ltd., which is one liquid addition type of silicone resin comprising dimethylpolysiloxane having vinyl groups at both ends as a main component and which has hardness (durometer A) of 40, elongation of 650% and tensile strength of 5.4MPa. After being confirmed that the compact was soaked for 1 hour so that the binder solution was sufficiently permeated into the inner part of the compact, the compact was taken out and dried. Then, the compact was heated for curing at 120°C for 2 hours under an atmosphere of argon to produce a hydrogen absorbing composite compact containing silicone resin. The amount of the impregnated binder (solid content) was about 2% by weight in the hydrogen absorbing composite compact (weight). The impact resilience for the obtained compact was measured according to Japanese Industrial Standard (JIS) K6255. The measured impact resilience was 16%.

### <Example 2>

A compact of a hydrogen absorbing alloy which had been prepared in the similar manner to that in Example 1, was placed in a toluene solution of 20% by weight silicone resin and deaerated for a prescribed period. The silicone resin used is KE45TS supplied by Shin-Etsu Chemical Co., Ltd., which is one liquid and de-oxime type condensation curing silicone resin comprising dimethylpolysiloxane having silanols at both ends (viscosity of 20,000cp) as a main component and which has hardness of 20, elongation of 300% and tensile strength of 2.0MPa. After being confirmed that the compact was soaked for 1 hour so that the binder solution was sufficiently permeated into the inner part of the compact, the compact was taken out. Then, the compact was cured by condensation under an atmosphere for 7 days to produce a hydrogen absorbing compact containing silicone resin. The amount of the impregnated binder (solid content) was about 2.5% by weight in the hydrogen absorbing compact (weight). The impact resilience measured as same manner in Example 1 was 19%.

### <Example 3>

After elements which had been weighed so as to be the same alloy composition as that in Example 1 were melted under an atmosphere of argon, the molten metals being kept at 1450°C were provided to a rotating disc made of boron nitride through a zirconia nozzle (the hole diameter: 5mm). The obtained spherical atomization powder of the hydrogen absorbing alloy was mixed with silicone resin (KE1820 supplied by Shin-Etsu Chemical Co., Ltd.) at the weight ratio of 9 : 1. In order to obtain a sufficient mixing in this case, the silicone resin had been diluted in advance in toluene to be a concentration of 40% by weight. After toluene was removed by drying under the atmosphere, 1 g of the mixture obtained was placed in a circular metal mold of 10mm in diameter and was molded by compression at a pressure of 715 MPa. Then, the obtained compact was thermally cured at 120°C for 2 hours in argon to produce a hydrogen absorbing compact containing silicone resin. The impact resilience measured as same manner in Example 1 was 23%.

### <Example 4>

After hydrogen absorbing alloy ingot produced in the similar manner to that in Example 1 was roughly pulverized by means of a jaw crusher to the extent of about 2mm in particle diameter under an atmosphere of nitrogen, it was further pulverized to 60*µ*m in average particle diameter by means of a impact pin mill similarly under an atmosphere of nitrogen to produce hydrogen absorbing alloy powder. The obtained hydrogen absorbing alloy powder was mixed with silicone resin (KE1820 supplied by Shin-Etsu Chemical Co., Ltd.) at the weight ratio of 8 : 2. In order to obtain a sufficient mixing in this case, the silicone resin had been diluted in advance in toluene to be a concentration of 40% by weight.

After toluene was removed by drying under an atmosphere, the resulting paste-like mixture was extruded to yield a string having a diameter of 5mm. Then, it was heated for curing at 120°C for 2 hours in argon to produce a hydrogen absorbing composite compact containing silicone resin. The impact resilience measured as same manner in Example 1 was 30%.

### <Comparative Example 1>

A compact which had been only molded by compression without any binder in Example 1 is assigned to Comparative Example 1. The impact resilience was attempted to be measured as same manner in Example 1, but was not measurable because the obtained compact was made of alloy only.

### <Comparative Example 2>

A compact of a hydrogen absorbing alloy prepared in a similar manner to that in Example 1 was placed and deaerated in an aqueous solution of 5% by weight PVA (Polymerization degree of PVA: 2000) for a certain period. After being confirmed that the compact was soaked for 1 hour so that the binder solution was sufficiently permeated into the inner part of the compact, the compact was taken out and dried. The amount of the impregnated binder (solid content) at this time was about 0.4% by weight in the hydrogen absorbing material (weight). The impact resilience was attempted to be measured as same manner in Example 1, but was not measurable in similar manner to that of Comparative Example 1 because the obtained compact had the binder impregnated.

### <Measurement of apparent density>

The dimensions and weights of hydrogen absorbing compacts obtained in Examples 1 to 4 and Comparative Examples 1 to 2 were measured and then apparent density of each compact was calculated.

### <Measurement of hydrogen absorption rate>

The hydrogen absorbing properties of hydrogen absorbing compacts obtained in Examples 1 to 4 and Comparative Examples 1 to 2 were measured. The hydrogen storage compacts were set in PCT measuring device (made by Resca Co., Ltd.), evacuated at room temperature for 1 hour, and then activated by introduction of 80°C hydrogen gas at the pressure of 3MPa. The time required for activation was approximately from 30 minutes to 1 hour in every sample (compact). After each activated sample was evacuated for 1 hour, hydrogen gas of 3MPa was introduced thereto and a necessary time to absorb the hydrogen up to 0.9% by weight based on the alloy was measured.

### <Measurement of PCT properties>

After the activated samples were evacuated for 1 hour, their PCT properties (pressure, composition, and temperature) were measured at 80°C. Incidentally, the PCT properties were reduced to the absorbed and desorbed amounts of hydrogen per hydrogen absorbing alloy. After PCT properties were measured, samples were evacuated at 80°C for 1 hour and taken out. Then, their disintegrations were checked by observing their appearances. The results are shown in Table 1. Figure 1 shows PCT properties of the hydrogen absorbing compact in

### Example 1.

Moreover, the absorbed amount of hydrogen (wt%) which is obtained based on the obtained PCT property curve at the pressure of 1MPa, is assigned to the maximum absorption.

**Table 1**

| | Apparent density (g/cm³) | Time for absorbing 0.9 wt% H₂ (sec.) | Maximum absorption (wt%) | disintegration of sample |
|---|---|---|---|---|
| Example 1 | 4.28 | 425 | 1.13 | Not present |
| Example 2 | 4.30 | 433 | 1.15 | Not present |
| Example 3 | 5.74 | 452 | 1.11 | Not present |
| Example 4 | 3.82 | 467 | 1.10 | Not present |
| Comparative Example 1 | 4.48 | 413 | 1.18 | Present |
| Comparative Example 2 | 4.46 | 472 | 1.17 | Present |

### Industrial Applicability

The hydrogen absorbing composite compact of the present invention comprises a binder of silicone resin, which is excellent in elasticity. Accordingly, none of decay, transformation and the like occurs even in a region where the amount of the binder is small, keeping almost the same absorbing speed and quantity as alloy itself owing to an excellent gas permeation property of silicone resin.

Moreover, according to the present invention, it is possible to provide any shape of the hydrogen absorbing composite compact by various molding methods such as compression and extrusion, the compact not being decayed or transformed even when absorptions and desorptions of hydrogen are repeated.

## Claims

1. A hydrogen absorbing composite compact comprising a hydrogen absorbing material and silicone resin.

2. A hydrogen absorbing composite compact according to Claim 1, wherein said hydrogen absorbing material is selected from metal, a carbon material and alloy, each of which has an ability to absorb or desorb hydrogen.

3. A hydrogen absorbing composite compact according to Claim 1 or 2, wherein said hydrogen absorbing material is hydrogen absorbing alloy.

4. A hydrogen absorbing composite compact according to any one of Claims 1 to 3, wherein said silicone resin is selected from radical curing rubber, addition curing rubber and condensation curing rubber.

5. A hydrogen absorbing composite compact according to any one of Claims 1 to 4, wherein said silicone resin is comprised in a content of 0.5 to 50% by weight in the compact.

6. A process for making a hydrogen absorbing composite compact, comprising a step wherein a hydrogen absorbing material is molded by compression, a step for impregnation in a silicone resin solution or a silicone resin dispersion liquid, and a step for curing.

7. A process for making a hydrogen absorbing composite compact, comprising a step for mixing a hydrogen absorbing material with any one selected from silicone resin itself, a silicone resin solution and a silicone resin dispersion liquid, a sep for molding, and a step for curing.
